# EUROPEAN PATENT APPLICATION

(11) **EP 2 315 376 A1**
(43) Date of publication of application: **27.04.2011**
(21) Application number: 09306004.4
(22) Date of filing: 23.10.2009
(51) Int. Cl.: H04B 17/00

(54) **System and method for a remote shut down of a radio communications link**

(71) Applicant: Alcatel Lucent, 75008 Paris (FR)
(72) Inventor: De Blasio, Giuseppe, 135 Roma (IT); Barzaghi, Giorgio, 20056 Grezzago (IT)
(74) Representative: Shamsaei Far, Hassan

(57) **Abstract**

A method for indicating a failure in a microwave radio link between a transmitting Ethernet equipment and a receiving Ethernet equipment and an Ethernet equipment for performing the method are disclosed. The radio link comprises a first path and a second path. At the receiving Ethernet equipment a failure affecting a first path of the radio link is detected. From the receiving Ethernet equipment a signal is transmitted to the transmitting Ethernet equipment using the second path of the radio link where the signal comprises a link failure indication.

## Description

The present invention relates to radio communications.

### BACKGROUND ART

Ethernet microwave networks relate to transmitting signals over microwave radio links from a transmitting Ethernet interface to a receiving Ethernet interface. These links may in occasions suffer from failure due to a diversity of causes, for example due to hardware failure or radio propagation failure. In such failure conditions it is desirable that suitable action is taken in order to re-rout the traffic. Performing the so-called Link Failure & Continuity Check as made available by Ethernet Operation And Maintenance instructions (*e.g*. IEEE 802.1ag recommendation) are not suitable for the fast switching time required when circuit emulation cervices are carried over the Ethernet microwave network.

In principle continuity check over an Ethernet connection running at for example 3.3 msec is able to fast-detect a failure. However, problem arises when this type of continuity check is required to be run on Ethernet devices connected to a microwave network, where the devices often do not support such functionality because it requires usage of dedicated HW resources. Furthermore, in case of radio propagation failure condition, continuity check messages may continue to be received, so the fault may not be revealed

One currently available solution relates to a fast shutdown procedure of the physical layer of the microwave Ethernet interface in order to make aware the other devices involved in the communication of a failure in the link of the microwave interface.

When the failure on microwave path affects only one direction, a situation which is very likely to happen in radio systems, such fast link shutdown is applied only in the equipment at the reception side and not at the equipment at the transmission side. However, the devices attached to the Ethernet microwave link typically "see" such link as bidirectional. As a consequence, the devices attached to the local (receiving) equipment are able to detect the failure and therefore detect that the link is not working in bidirectional mode. In contrast, the devices attached to the remote (transmitting) equipment are not aware of the failure and therefore consider the link to be working in bidirectional mode. This gives rise to an inefficient use of the network resources.

In fact, the drawbacks may go beyond an inefficient use of network resources, as in certain scenarios the traffic may be lost. This may happen in situations where the device at near end (the local end) which detects the failure re-route the traffic over a new path, the device at the remote end does not perform the re-routing of the traffic away from the failed radio connection path, thereby causing loss of traffic.

### SUMMARY

It is therefore desired to provide a fast remote signaling capable of transmitting a link failure indication over the Ethernet microwave link towards the Ethernet interface device of a remote equipment.

According to some embodiments, there is provided a method for indicating a failure in a microwave radio link between a transmitting Ethernet equipment and a receiving Ethernet equipment, the radio link comprising a first path and at least a second path, the method comprising the steps of:
- detecting at the receiving Ethernet equipment a failure affecting a first path of the radio link, and
- transmitting from the receiving Ethernet equipment a signal comprising a link failure indication to the transmitting Ethernet equipment using a second path of the radio link.

According to some embodiments, there is provided an Ethernet equipment adapted for indicating a failure in a microwave radio link to a remote Ethernet equipment, the radio link comprising a first path and at least a second path, the Ethernet equipment being configured for:
- detecting a failure affecting a first path of the radio link, and
- transmitting a signal comprising a link failure indication to the remote Ethernet equipment using a second path of the radio link.

These and further features and advantages of the present invention are described in more detail in the following description as well as in the claims with the aid of the accompanying drawings.

### BRIEF DESCRIPTION OF THE DRAWINGS

Figure 1 is an exemplary schematic representation of a radio communication network in which link shutdown is performed according to know solutions.
Figure 2 is an exemplary schematic representation of a radio communication network in which link shutdown is performed according to embodiments of the invention.

### DETAILED DESCRIPTION

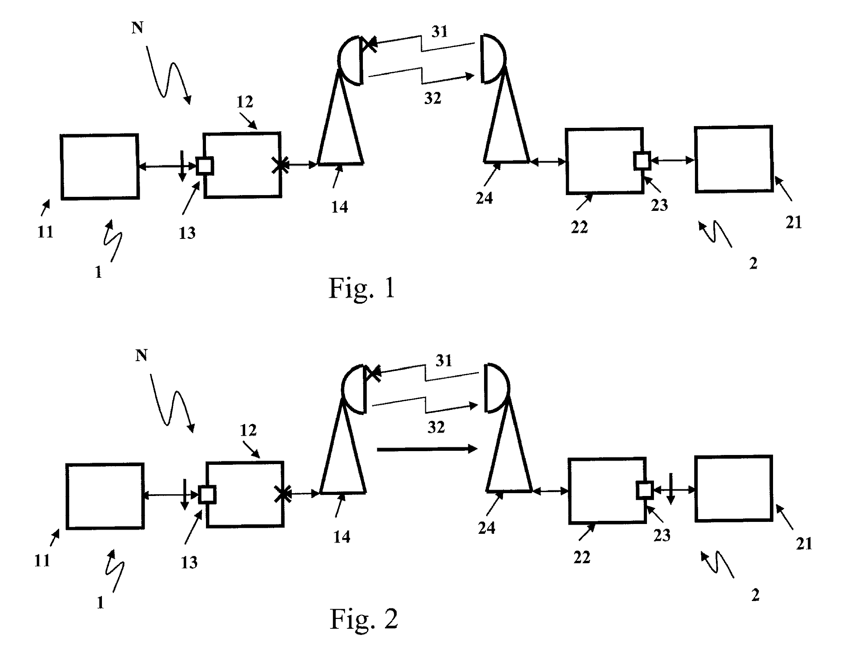

Figure 1 is an exemplary schematic representation of a radio communication network in which link shutdown is performed according to known solutions. The radio communication network N comprises a first transmission/reception end station 1 and a second transmission/reception end station 2. For simplicity reasons, the transmission/reception ends 1 and 2 will be referred to hereinafter as end stations. It is to be noted that the network N is represented only by elements that are useful for the understanding of the present description. Other network elements that may typically be needed for a correct operation of the network, but are not relevant for understanding the present description are therefore not represented.

The first end station 1 comprises an Ethernet switch 11, coupled to an Ethernet microwave equipment 12 through an Ethernet interface 13. The Ethernet microwave equipment is further coupled to a radio link interface 14 such as an antenna.

In similar fashion, second end station 2 comprises an Ethernet switch 21, coupled to an Ethernet microwave equipment 22 through an Ethernet interface 23. The Ethernet microwave equipment is further coupled to a radio link interface 24 such as an antenna.

It is assumed that end station 1 and end station 2 are capable of communicating with each other through a first communication path 31 and a second communication path 32, the first path 31 and the second path 32 forming part of a bidirectional communication link.

It is further assumed that a failure is produced in the first path 31. The failure may be due to any hardware failure or any propagation failure. This is shown by a cross (X) sign on the first path 31 in the figure.

The failure is received by interface 14 and then detected by the local Ethernet microwave equipment 12 as is shown by a cross sign (X) on the Ethernet microwave equipment 12.

As a result of the detection of the failure, a fast shutdown operation is performed in the first end station 1, which is the receiving end. This fast shutdown is shown on the figure by means of a downward arrow between the Ethernet interface 13 and the Ethernet switch 11.

In such a situation, the failure is only detected on the first end station 1 (which in this case is the local end). However, at the remote end, namely the second end station 2, the Ethernet switch 21 coupled to the Ethernet microwave equipment 22 is not aware of the failure and "believes" that the bidirectional link from end station 2 to end station 1 is operating correctly, whereas the Ethernet switch 11 connected to Ethernet microwave equipment 12 is aware of the failure. This situation gives rise to inefficient use of network resources.

It is therefore desired to provide a solution capable of implementing a fast link shutdown of an Ethernet port pertaining to an Ethernet Microwave equipment, such that such shutdown in performed from a remote end.

According to some embodiments featured herein, the failure over the reception path of a radio link, due to hardware or radio propagation failure, detected locally is propagated remotely towards the adjacent equipment over the working transmission path of radio link.

The propagation of the link failure from the local receiving end to the remote transmitting end may be made transmitting an information indicative of the failure in the link (hereinafter, link failure indication). This indication may be transmitted using two alternative approaches: in-band approach and out-band approach.

In the in-band approach the link failure indication is carried by an Ethernet frame. In order to have a fast reaction on the remote side, the Ethernet frames carrying the remote failure indication preferably has a higher priority in the output scheduling algorithm over the frames not carrying priority information.

In the out-band approach the link failure indication is carried using a dedicated channel inside the radio frame to be transmitted, preferably such link failure indication is carried in the overhead of the radio channel. Alternatively, the link failure indication may be one more bits inside the radio frame header, although a single bit is preferred in order to avoid excessive occupation inside the header. Figure 2 is an exemplary schematic representation of a radio communication network in which a remote link shutdown is performed according to some embodiments featured herein. In this figure, like elements have been given like reference numerals as those of figure 1.

Referring now to figure 2, a radio communication network N comprises a first transmission/reception end station 1 and a second transmission/reception end station 2. Here again for simplicity reasons, the transmission/reception ends 1 and 2 will be referred to hereinafter as end stations. It is to be noted that the network N is represented only by elements that are useful for the understanding of the present description. Other network elements that may typically be needed for a correct operation of the network, but are not relevant for understanding the present description are therefore not represented.

The first end station 1 comprises an Ethernet switch 11, coupled to an Ethernet microwave equipment 12 through an Ethernet interface 13. The Ethernet microwave equipment is further coupled to a radio link interface 14 such as an antenna.

In similar fashion, second end station 2 comprises an Ethernet switch 21, coupled to an Ethernet microwave equipment 22 through an Ethernet interface 23. The Ethernet microwave equipment is further coupled to a radio link interface 24 such as an antenna.

It is assumed that end station 1 and end station 2 are capable of communicating with each other through a first communication path 31 and a second communication path 32, the first path 31 and the second path 32 forming part of a bidirectional communication link.

It is further assumed that a failure is produced in the first path 31. The failure may be due to any hardware failure or any propagation failure. This is shown by a cross (X) sign on the first path 31 in the figure.

The failure is received by interface 14 and then detected by the local Ethernet microwave equipment 12 as is shown by a cross sign (X) on the Ethernet microwave equipment 12.

As a result of the detection of the failure, a fast shutdown operation is performed in the first end station 1, which is the receiving end. This fast shutdown is shown on the figure by means of a downward arrow between the Ethernet interface 13 and the Ethernet switch 11.

However, according to embodiments featured herein, a link failure indication is transmitted from the receiving end station 1 to the remote transmitting end station 2, using the second (return) path 32 which is working, in order to make the latter aware of the failure detected at the receiving end station 1. This is shown in figure 2 by means of an arrow from end station 1 to end station 2.

In this manner, upon receiving the link failure indication at end station 2, the Ethernet switch 21 coupled to the Ethernet microwave equipment 22 becomes aware of the failure and may perform a fast shutdown at end station 2, for example at the Ethernet interface 23 as schematically shown by a downward arrow at the Ethernet interface 23 in figure 2.

As mentioned above the link failure detection may be transmitted using the in-band approach or the out-band approach. In case of need in practice, the two approaches may be used simultaneously to ensure greater system efficiency. However, the out-band approach is preferred as it allows for better efficiency. Using the solution provided herein for a remote fast link shutdown, an Ethernet microwave link acts in a similar fashion as a physical Ethernet "cable", where every failure over the link is immediately seen at the two ends. In this manner, the devices facing the Ethernet microwave point-to-point link are able to perform Ethernet protection algorithms such as RSTP in a very efficient way. RSTP stands for Rapid Spanning Tree Protocol, which is an Ethernet Control Protocol able to determine the best path inside an Ethernet network avoiding loops. RSTP is only one example of a protocol able to determine best paths over an Ethernet network. Other known protocols of such type may likewise be used. A fast detection of failures affecting such network enables these protocols (RSTP as an example) to calculate in fast manner a new path in the network restoring as soon as possible the connectivity and therefore reducing the "out of service" time. The present solution therefore provides an effective end-to-end failure detection and signaling for Ethernet connection based on Ethernet microwave systems. This is specially advantageous in the deployment of packet networks, where the present solution provide a fast re-routing of traffic in case of network failures. The Ethernet switch, the Ethernet interface, the Ethernet microwave equipment may include blocks which can be hardware devices, software modules or combination of hardware devices and software modules

It is to be noted that the system (device, apparatus) of the invention can be used to practice another and materially different method and is not be construed to be limited to practicing only the method as claimed in the present invention. Likewise, the method of the invention can be practiced by another materially different system, device, apparatus or equipment than the one(s) claimed in the present invention.

Further it is to be noted that the list of structures corresponding to the claimed means is not exhaustive and that one skilled in the art understands that equivalent structures can be substituted for the recited structure without departing from the scope of the invention.

It should be appreciated by those skilled in the art that any block diagrams herein represent conceptual views of illustrative circuitry embodying the principles of the invention.

## Claims

1. A method for indicating a failure in a microwave radio link between a transmitting Ethernet equipment and a receiving Ethernet equipment, the radio link comprising a first path and a second path, the method comprising:
- detecting at the receiving Ethernet equipment a failure affecting a first path of the radio link, and
- transmitting from the receiving Ethernet equipment a signal comprising a link failure indication to the transmitting Ethernet equipment using the second path of the radio link.

2. The method of claim 1 wherein the link failure indication is transmitted using an in-band approach wherein the link failure indication is carried by an Ethernet frame.

3. The method of claim 2, wherein the Ethernet frame carrying the remote failure indication has priority in an output scheduling algorithm for transmission.

4. The method of claim 1 wherein the link failure indication is transmitted using an out-band approach wherein the link failure indication is carried using a dedicated channel inside a radio frame to be transmitted.

5. The method of claim 4 wherein the link failure indication is carried in an overhead of the dedicated radio channel or the link failure indication is at least one bit inside the radio frame header.

6. An Ethernet equipment adapted for indicating a failure in a microwave radio link to a remote Ethernet equipment, the radio link comprising a first path and a second path, the Ethernet equipment being configured for:
- detecting a failure affecting a first path of the radio link, and
- transmitting a signal comprising a link failure indication to the remote Ethernet equipment using the second path of the radio link.
